# FASCICULE DE BREVET EUROPEEN

(11) **EP 2 628 032 B1**
(45) Date de publication et mention de la délivrance du brevet: **23.03.2016**
(21) Numéro de dépôt: 11779739.9
(22) Date de dépôt: 13.10.2011
(51) Int. Cl.: G01W 1/14, G08B 19/02

(54) **PROCEDE ET DISPOSITIF DE DETECTION ANTICIPEE DE GIVRE SUR UNE PISTE**
VERFAHREN UND VORRICHTUNG FÜR DIE ANTIZIPIERTE ERKENNUNG VON VEREISUNG EINER LANDE-/STARTBAHN
METHOD AND DEVICE FOR THE ANTICIPATED DETECTION OF ICING ON A RUNWAY

(30) Priorité: 14.10.2010 FR 1004040
(43) Date de publication de la demande: 21.08.2013
(73) Titulaire: AER, 94550 Chevilly-Larue (FR); Office National d'Etudes et de Recherches Aérospatiales (ONERA), 92320 Châtillon (FR)
(72) Inventeur: GUFFOND, Didier, F-92260 Fontenay-aux-Roses (FR); SCHEGERIN, Robert, F-78000 Versailles (FR); LACHAUD, Hervé, F-92350 Le Plessis Robinson (FR)
(74) Mandataire: Plaçais, Jean Yves
(86) Numéro de dépôt international: PCT/FR2011/000550
(87) Numéro de publication internationale: WO 2012/049380

(56) Documents cités:
- FR-A1- 2 605 402
- US-B1- 6 758 091

## Description

La présente invention concerne un procédé et un dispositif de détection anticipée de givre sur une piste.

Elle concerne également un dispositif et un procédé permettant d'anticiper et de connaitre avec précision le dépôt de givre sur une surface mobile.

Elle a plus particulièrement comme objet l'anticipation de l'épaisseur du givre sur une piste cyclable ou carrossable.

Elle a plus particulièrement comme objet l'anticipation de l'épaisseur du givre sur une piste de décollage et d'atterrissage d'aéronefs.

Elle concerne plus particulièrement mais non exclusivement l'anticipation de la présence de givre sur une route ou une autoroute.

Elle concerne également l'anticipation de la présence de givre sur des pales d'éoliennes ou sur des mécanismes sensibles au givre.

Actuellement l'aviation militaire et commerciale utilise des pistes de décollage et d'atterrissage qui sont nécessairement limitées en longueur. La présence d'une épaisseur de givre réduit notablement la masse maximale admissible au décollage et/ou à l'atterrissage. En effet les distances de freinage en cas de nécessité sont considérablement augmentées en cas de présence de givre sur la piste. Cette présence de givre doit être connue de la tour de contrôle qui la communique aux pilotes. La nuit il est difficile de déceler la présence de givre. La tour de contrôle doit donc envoyer des équipes sur les pistes pour vérifier régulièrement la non présence significative de givre, ce qui conduit à des dépenses importantes.

Sur autoroutes le problème est similaire. Il est vital de connaître rapidement et si possible d'anticiper l'état de givrage de la chaussée, pour informer les automobilistes, et organiser le dégivrage des pistes de roulement.

L'expérience montre qu'un laps de temps d'au moins 30 minutes est nécessaire pour organiser la communication et effectuer le dégivrage. Il est donc impératif de pouvoir anticiper l'apparition d'une épaisseur significative de givre sur la piste ou sur la route.

Idéalement il est nécessaire de pouvoir anticiper un dépôt de givre dès sa première apparition. Or les systèmes de mesure de givre ne fonctionnent que lorsque l'épaisseur de givre est supérieure à l'épaisseur conduisant à une diminution de l'adhérence sur la piste. Il est déjà trop tard.

Les accidents dus à la mauvaise connaissance de l'état de givrage des routes ou pistes d'atterrissage a conduit à de trop nombreux accidents.

L'objectif de l'invention proposée ici est de résoudre le problème posé de l'anticipation de la présence de givre sur une piste.

L'invention permet également de proposer une solution permettant d'améliorer la précision des moyens de mesures de l'épaisseur du givre sur une piste ou sur une route.

De nombreux moyens de détection de givré existent. On peut citer à titre d'exemple les sondes utilisant des ondes ultrasonores, les sondes à magnétostriction, les sondes utilisant les variations de pressions, les sondes utilisant les faisceaux optiques ou électro-optiques, .... Il existe également des sondes vibrantes qui en se recouvrant de givre ont une fréquence propre variant avec l'épaisseur de givre.

Toutes ces solutions ont des avantages et des inconvénients, mais ne permettent pas d'anticiper la formation de givre. Elles permettent seulement de déceler la présence de givre une fois que la couche de givre est suffisamment épaisse pour être décelée et éventuellement mesurée.

Il peut sembler aisé d'analyser les différents paramètres atmosphériques pour en déduire une probabilité d'apparition de givre. Dans la réalité ce phénomène est beaucoup trop complexe, et il s'avère très difficile voir impossible de prévoir un dépôt de givre sur une piste par analyse des paramètres atmosphériques.

Il est donc nécessaire de concevoir un dispositif accélérant le dépôt de givre d'une part mais qui soit représentatif des conditions de température de la piste d'autre part. En effet après étude nous nous sommes aperçus que de grandes différences existent entre la température de l'air ambiant et la température de la piste. Ceci est principalement dû au fait que la dérivée première de la courbe de la température de la piste en fonction du temps est très différente de la dérivée première de la courbe de la température de l'air en fonction du temps et donc la température de la piste peut être très différente de la température de l'air ambiant à un instant donné. D'autres paramètres comme le rayonnement de la piste, l'inertie thermique du sol sous la piste par exemple, accentuent encore ce phénomène.

Plusieurs dispositifs ont été proposés pour mesurer l'épaisseur de givre sur une surface et ont fait l'objet des dépôts de brevets suivants :
- Le brevet coréen KR20090096065 présente un dispositif permettant de connaitre avec précision le point de rosée par étude de la vibration d'un quartz. Ce dispositif ne permet pas d'anticiper le dépôt de givre sur une piste.
- Le brevet français FR2914906 du 11 avril 2007 présente un dispositif et un procédé permettant de détecter la présence de givre sur aéronef en vol. Il ne permet pas d'anticiper la présence de givre sur une piste.
- Le brevet français FR2605402 du 15 octobre 1986 présente un dispositif comprenant un objet tournant muni d'un système de mesure de l'épaisseur de givre à ultra-sons. Ce système ne prend pas en compte la température de la piste qui peut être très différente de celle de l'air ambiant. En conséquence le dispositif présenté par le brevet FR2605402 est totalement inopérant et donc inutilisable lorsque la température de la pisté est différente de celle de l'atmosphère ambiant, ce qui est souvent le cas.
- Le brevet japonais JP6174344 présente un dispositif comprenant deux mesures de température en deux points d'un échangeur. Ce dispositif ne suggère nullement la présence d'un objet mobile dans l'atmosphère environnante.
- Le brevet américain US6758091 présente un dispositif d'anticipation d'un dépôt de givre utilisant un objet se déplaçant dans l'air environnant, le dispositif comprenant par ailleurs un moyen de convection forcée de l'air environnant sur l'objet, de telle sorte que la température de l'objet est régulée pour être sensiblement égale à la température de l'air environnant. Ce dispositif ne considère pas la température de la piste.

L'invention parvient à résoudre les problèmes énoncés précédemment en proposant un dispositif et un procédé spécialement bien adaptés permettant de mesurer de façon précise l'épaisseur de givre EP et d'anticiper la formation de givre sur une surface comme une piste P ou une route.

A cet effet elle propose un dispositif comprenant un
- un objet ayant une vitesse relative non nulle par rapport à l'atmosphère environnante de la piste, cette dite atmosphère environnante étant à une température TA,
- un moyen permettant de connaître l'épaisseur de givre présente sur ledit objet,
- un capteur de température permettant de mesurer la température TP de la piste P,
- un moyen de régulation de la température dudit objet de telle façon que la température dudit objet soit sensiblement égale ou inférieure à la température de la piste,
- un système d'alerte permettant de communiquer à un poste de contrôle une alerte lorsque l'épaisseur de givre sur ledit objet atteint une valeur correspondant à une épaisseur de givre significative sur la piste (P).

Dans des modes de réalisations non limitatifs, le dispositif selon l'invention pourra présenter les éléments et/ou les caractéristiques supplémentaires décrits ci-après pris isolément ou en combinaison de manière avantageuse dans lequel le dispositif permettant l'anticipation d'un dépôt de givre d'épaisseur EP sur une piste P, comprend
- un moyen de calcul permettant de prédéfinir au temps t0 une épaisseur de givre EP au temps t1 de la piste P, en fonction de la dérivée première en fonction du temps (dEO/dt), à partir de l'épaisseur EO de la courbe d'évolution de l'épaisseur de givre présente sur l'objet au temps t0.
Il est également avantageux
- que la température TO dudit objet, régulée par le moyen de régulation MR soit très légèrement inférieure à la température TP de la piste P,
- et/ou que la différence entre la température de la piste et la température régulée de l'objet soit égale à une valeur prédéterminée,
- que le dispositif comprenne en outre un moyen permettant de vérifier sont bon fonctionnement avant mise en route et/ou pendant son fonctionnement ou dès que la température de la piste ou de l'atmosphère environnante est inférieure à une valeur prédéterminée,
- que l'objet soit mobile dans l'atmosphère environnante pour obtenir ladite vitesse non nulle par rapport à l'atmosphère environnante de la piste.
- et/ou que ledit objet soit mobile en rotation autour d'un axe fixe XX', ledit objet comprenant un axe longitudinal YY', situé dans un plan perpendiculaire à l'axe de rotation, ledit objet mobile étant monté sur un bras tournant (B) ayant un axe longitudinal ZZ', de telle sorte que l'axe YY' et ZZ' forment un angle ALPHA, afin que le givre formé sur l'objet ne soit pas éjecté par la force centrifuge.
- et/ou que l'objet soit placé dans un dispositif de convection forcée de l'atmosphère environnante de la piste pour obtenir une vitesse relative non nulle par rapport à l'atmosphère environnante de la piste.
- et/ou que l'objet ne se mette en mouvement que si la température de la piste est inférieure à une valeur seuil prédéfinie,
- et/ou que le mouvement de convection forcée de l'atmosphère environnante ne soit activé que si la température de la piste est inférieure à une valeur seuil prédéfinie,
- et/ou que le dispositif comprenne plusieurs bras tournant à des vitesses différentes.
- et/ou qu'un moyen permette de piloter la vitesse de rotation de l'objet en fonction des conditions environnementales.
- et/ou qu'une commande de « resset » permette d'enlever le givre sur l'objet à la demande (par exemple après un dégivrage des pistes) afin de tenir compte de l'état de la surface de la piste.
Dans des modes de réalisation non limitatifs, l'invention propose également un procédé permettant la mise en oeuvre du dispositif précédemment décrit, comprenant au moins
- un objet ayant une vitesse relative non nulle par rapport à l'atmosphère environnante de la piste, cette dite atmosphère environnante étant à la température TA,
- un moyen permettant de connaitre l'épaisseur de givre EO présente sur ledit objet mobile,
- un capteur de température CT permettant de mesurer la température TP de la piste P,
- un moyen de régulation MR de la température TO dudit objet mobile de telle façon que la température TO de cedit objet mobile soit sensiblement égale à la température TP de la piste,
- un système d'alerte permettant de communiquer à un poste de contrôle PC la présence d'une épaisseur significative de givre EG présente sur ledit objet mobile,
et comprenant les étapes consistant à
- mesurer la température TP de la piste P,
- réguler la température de l'objet à une température sensiblement égale à celle de la piste P,
- mesurer l'épaisseur de givre présente sur l'objet,
- envoyer un message d'alerte à un poste de contrôle des que l'épaisseur de givre sur l'objet dépasse une valeur prédéfinie.

Dans des modes de réalisation non limitatifs, le procédé selon l'invention pourra présenter les étapes supplémentaires décrites ci-après prises isolément ou en combinaison de manière avantageuse :
- mesurer la température TP de la piste P,
- réguler la température de l'objet à une température légèrement inférieure à celle de la piste P,
- mesurer l'épaisseur de givre présente sur l'objet,
- envoyer un message d'alerte à un poste de contrôle des que l'épaisseur de givre sur l'objet dépasse une valeur prédéfinie.

Dans un autre mode de réalisation non limitatif, le procédé selon l'invention pourra présenter les étapes supplémentaires décrites ci-après prises isolément ou en combinaison de manière avantageuse :
- mesurer la température TP de la piste P,
- réguler la température de l'objet à une température égale ou légèrement inférieure à celle de la piste P,
- mesurer l'épaisseur de givre présente sur l'objet à l'instant t1,
- mesurer l'épaisseur de givre présente sur l'objet à l'instant t1+dt
- calculer à partir des informations relatives à l'épaisseur de givre présente sur l'objet à l'instant t1 et des informations relatives à l'épaisseur de givre présente sur l'objet à l'instant t1+dt dans quel laps de temps DELTAT l'épaisseur de givre sur la piste atteindra une épaisseur critique EC,
- envoyer un message d'alerte à un poste de contrôle indiquant dans combien de temps l'épaisseur de givre sur la piste dépassera une valeur critique EC.

Un mode de réalisation de l'invention sera décrit ci-après, à titre d'exemple non limitatif, en faisant référence aux dessins annexés dans lesquels :
La figure 1 représente schématiquement un exemple de dispositif selon l'invention où l'objet est mobile en rotation par rapport à l'atmosphère ambiante.
La figure 2a représente schématiquement en vue de dessus le dispositif selon l'invention.
La figure 2b représente schématiquement en vue de dessus une variante du dispositif selon l'invention
La figure 3 représente schématiquement un autre exemple de dispositif selon l'invention où l'objet est placé dans un dispositif de convection forcée de l'atmosphère environnante.

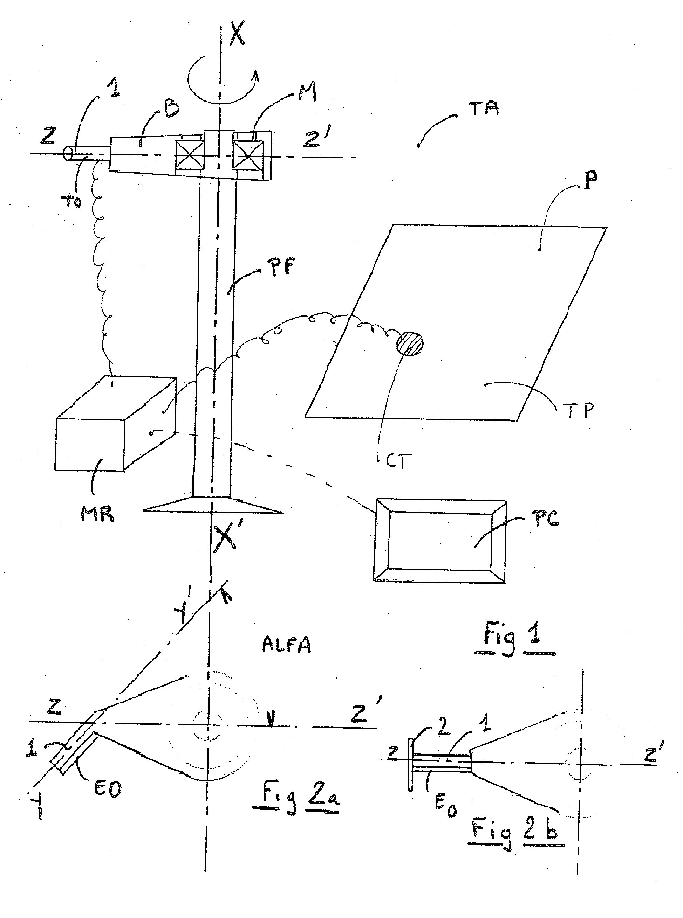

La figure 1, représente schématiquement un morceau de piste P comprenant une sonde de température CT et étant à la température TP. Un bras tournant B est entrainé en rotation, par un moteur M, autour de l'axe XX'. Un objet 1 est entrainé en rotation par le bras B et est maintenu à une température TO par le régulateur de température MR. L'objet 1 comprend un moyen de mesure de l'épaisseur de givre sur l'objet 1. Si l'épaisseur de givre décelée sur l'objet 1 est supérieure à une valeur prédéterminée alors un message d'alerte est envoyé au poste de contrôle PC.

La figure 2a représente de façon schématique une vue de dessus du bras tournant B. Ici un angle ALFA existe entre l'axe ZZ' du bras tournant et l'axe YY' de l'objet 1.

La figure 2b représente de façon schématique une vue de dessus du bras tournant B. Ici une structure 2 sensiblement perpendiculaire à l'objet 1, placée en extrémité dudit objet empêche le givre d'être propulsé à l'extérieur sous l'effet de la force centrifuge.

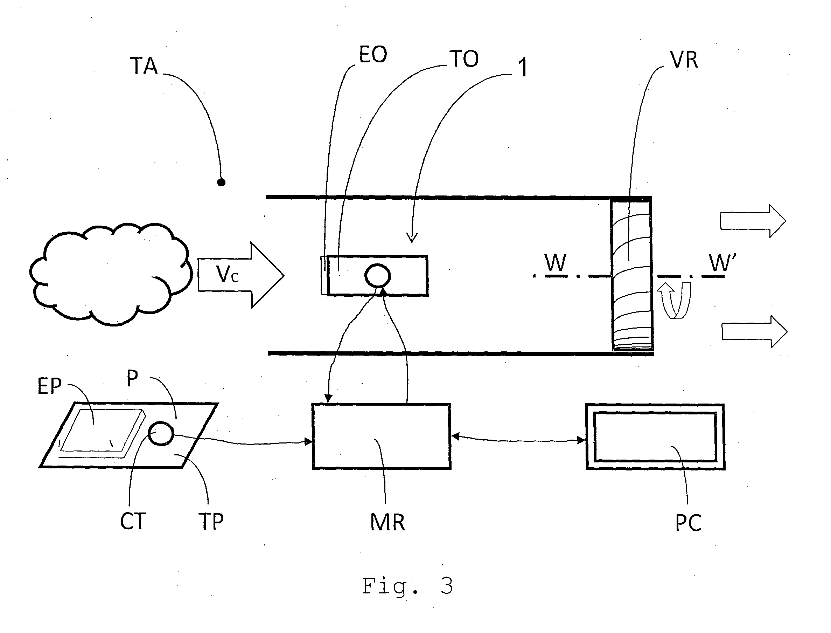

La figure 3 représente de façon schématique un autre exemple de réalisation suivant l'invention. L'objet 1 est placé dans un conduit ici de forme cylindrique. Un ventilateur VR placé ici en aval de l'objet, aspire l'atmosphère environnante, créant ainsi une vitesse non nulle de l'air ambiant par rapport à l'objet. L'objet comprend un moyen de mesure de l'épaisseur de givre présent sur sa partie frontale. La température de l'objet est régulée par le moyen de régulation MR à une température TO sensiblement égale à la température de la piste ici à une température inférieure de 0,5 °C de la température TP de la piste P. L'information correspondant à l'épaisseur de givre sur l'objet en fonction du temps est traitée par un calculateur, prenant en compte l'épaisseur de la couche de givre sur l'objet et la variation de cette épaisseur en fonction du temps pour en déduire de façon anticipée la présence significative de givre sur la piste. Cette information est ensuite envoyée au poste de contrôle PC.

Un procédé selon l'invention consiste à effectuer la succession d'étapes suivantes :
- mesure régulière de la température TP de la piste
- mise en rotation du bras tournant B si la température TP est inférieure à une valeur prédéterminée, par exemple +5°C
- régulation de la température de l'objet mobile à une température légèrement inférieure à la température TP (par exemple TP-0,4°C),
- mesure de l'épaisseur de givre présente sur l'objet 1 à l'instant t0,
- mesure de la variation de l'épaisseur de givre sur l'objet à un instant proche de t0,
- détermination par un calculateur de l'épaisseur de givre qui sera présente dans un futur proche sur la piste (par exemple dans 30 minutes) par analyse de la mesure de l'épaisseur de givre présente sur l'objet 1 à l'instant t0 et de la mesure de la variation de l'épaisseur de givre sur l'objet à un instant proche de t0.
- Transmission du résultat obtenu par le calculateur à un poste de contrôle.

Un autre procédé selon l'invention consiste à effectuer la succession d'étapes suivantes :
- mesure régulière de la température TP de la piste
- mise en mouvement de l'atmosphère environnante autour de l'objet si la température TP est inférieure à une valeur prédéterminée, par exemple +5°C
- régulation de la température de l'objet à une température légèrement inférieure à la température de la piste TP (par exemple TP-0,4°C),
- mesure de l'épaisseur de givre présente sur l'objet 1 à l'instant t0,
- mesure de la variation de l'épaisseur de givre sur l'objet à un instant proche de t0,
- détermination par un calculateur de l'épaisseur de givre qui sera présente dans un futur proche sur la piste(par exemple dans 30 minutes) par analyse de la mesure de l'épaisseur de givre présente sur l'objet 1 à l'instant t0 et de 1a mesure de la variation de l'épaisseur de givre sur l'objet à un instant proche de t0.
- Transmission du résultat obtenu par le calculateur à un poste de contrôle.

On voit donc qu'il est possible de réaliser de façon industrielle un dispositif et de concevoir un procédé permettant d'anticiper l'épaisseur de givre qui sera présente sur une piste.

L'homme de l'art pourra appliquer ce concept à de nombreux autres systèmes similaires sans sortir du cadre de l'invention défini dans les revendications jointes. Par exemple le dispositif ou le procédé défini dans les revendications jointes permettra d'anticiper le niveau de givre sur une pale d'éolienne ou sur un mécanisme dont le fonctionnement peut être altérer par la présence de givre.

## Revendications

1. Dispositif d'anticipation d'un dépôt de givre d'épaisseur (EP) sur une piste (P) comprenant :
un objet (1) ayant une vitesse relative non nulle (VC) par rapport à l'atmosphère environnante de la piste (P), cette dite atmosphère environnante étant à une température (TA),
un moyen permettant de connaître l'épaisseur de givre (EO) présente sur ledit objet,
un système d'alerte permettant de communiquer à un poste de contrôle (PC) une alerte lorsque l'épaisseur de givre (EO) sur ledit objet atteint une valeur correspondant à une épaisseur de givre (EP) significative sur la piste (P),
**caractérisé en ce qu'**il comprend en outre
un capteur de température (CT) permettant de mesurer la température (TP) de la piste (P),
- un moyen de régulation (MR) de la température (TO) dudit objet (1) de telle façon que la température (TO) dudit objet (1) soit sensiblement égale ou légèrement inférieure à la température (TP) de la piste.

2. Dispositif selon la revendication 1 comprenant en outre un moyen de calcul permettant de prédéfinir au temps t0 une épaisseur de givre (EP) au temps t1 sur la piste (P) à partir de la dérivée première par rapport au temps (dEO/dt) de la courbe d'évolution de l'épaisseur (EO) de givre présente sur l'objet au temps t0.

3. Dispositif selon l'une quelconque des revendications 1 ou 2 **caractérisée en ce que** la température (TO) dudit objet régulée par le moyen de régulation (MR) est légèrement inférieure à la température (TP) de la piste (P).

4. Dispositif selon la revendication 3 **caractérisé en ce que** la différence entre la température (TP) de la piste (P) et la température régulée dudit objet est égale à une valeur prédéterminée.

5. Dispositif selon l'une quelconque des revendications 1 à 4 **caractérisé en ce qu'**il comprend en outre des moyens permettant de vérifier le bon fonctionnement du système dès que la température de la piste est inférieure à une valeur seuil prédéfinie.

6. Dispositif selon l'une quelconque des revendications 1 à 5 **caractérisé en ce que** l'objet (1) est mobile dans l'atmosphère environnante pour obtenir ladite vitesse non nulle par rapport à l'atmosphère environnante de la piste (P).

7. Dispositif selon la revendication 6 **caractérisé en ce que** ledit objet mobile est mobile en rotation autour d'un axe fixe XX', ledit objet mobile comprenant un axe longitudinal YY', situé dans un plan perpendiculaire à l'axe de rotation, ledit objet mobile étant monté sur un bras tournant (B) ayant un axe longitudinal ZZ', de telle sorte que l'axe YY' et ZZ' forment un angle ALPHA, afin que le givre formé sur l'objet mobile ne soit pas éjecté par la force centrifuge.

8. Dispositif selon l'une quelconque des revendications 1 à 5 **caractérisé en ce qu'**il comprend un dispositif de convection forcée de l'atmosphère environnante de la piste (P) dans lequel est placé l'objet pour obtenir ladite vitesse (V_{C}) non nulle par rapport à l'atmosphère environnante de la piste (P).

9. Procédé de détection anticipée d'un dépôt de givre d'épaisseur (ÈP) sur une piste (P) comprenant :
un objet (1) ayant une vitesse non nulle par rapport à l'atmosphère environnante de la piste (P), cette dite atmosphère environnante étant à une température (TA),
- un moyen permettant de connaître l'épaisseur de givre (EO) présente sur ledit objet,
- un capteur de température (CT) permettant de mesurer la température (TP) de la piste (P),
- un moyen de régulation (MR) de la température (TO) dudit objet (1) de telle façon que la température (TO) dudit objet (1) soit sensiblement égale à la température (TP) de la piste,
- un système d'alerte permettant de communiquer à un poste de contrôle (PC) une alerte lorsque l'épaisseur de givre (EO) sur ledit objet atteint une valeur correspondant à une épaisseur de givre (EP) significative sur la piste (P),
**caractérisé en ce qu'**il comprend les étapes consistant à
- mesurer la température (TP) de la piste (P),
- réguler la température dudit objet à une température égale ou légèrement inférieure à celle de la piste (P),
- mesurer l'épaisseur de givre présente sur ledit objet,
- envoyer un message d'alerte à un poste de contrôle dès que l'épaisseur de givre sur l'objet dépasse une valeur prédéfinie.

10. Procédé de détection anticipée d'un dépôt de givre d'épaisseur (EP) sur une piste (P) selon la revendication 9 **caractérisée en ce que** l'étape consistant à mesurer l'épaisseur de givre présente sur ledit objet consiste à
- mesurer l'épaisseur de givre présente sur ledit objet à l'instant t0,
- mesurer l'épaisseur de givre présente sur ledit objet à l'instant t1 = t0 + dt, afin de calculer, à partir des informations relatives à l'épaisseur de givre présente sur ledit objet aux instants t0 et t1, dans quel laps de temps DELTAt l'épaisseur de givre sur la piste atteindra une épaisseur critique.
et **en ce que** dans l'étape consistant à envoyer un message d'alerte à un poste de contrôle, le message d'alerte indique dans combien de temps l'épaisseur de givre sur la piste dépassera ladite valeur critique.

## Patentansprüche

1. Vorrichtung zur antizipierten Erkennung einer Eisbelagsdicke (EP) auf einer Lande-/Start-/Fahrbahn (P), Folgendes umfassend:
einen Gegenstand (1), der eine nicht Null betragende Geschwindigkeit (VC) in Bezug auf die Umgebungsatmosphäre der Lande-/Start-/Fahrbahn (P) hat, wobei sich die Umgebungsatmosphäre auf einer Temperatur (TA) befindet,
eine Einrichtung, die es ermöglicht, die auf dem Gegenstand vorhandene Eisdicke (EO) zu kennen,
ein Warnsystem, das es ermöglicht, eine Warnmeldung an einen Kontroll-posten (PC) zu übertragen, wenn die Eisdicke (EO) auf dem Gegenstand einen Wert erreicht, der einer bezeichnenden Eisdicke (EP) auf der Lande-/Start-/Fahr-bahn (P) entspricht,
**dadurch gekennzeichnet, dass** sie darüber hinaus umfasst:
einen Temperatursensor (CT), der es ermöglicht, die Temperatur (TP) der Lande-/Start-/Fahrbahn (P) zu messen,
- eine Einrichtung (MR) zum Regeln der Temperatur (TO) des Gegenstands (1) auf eine solche Weise, dass die Temperatur (TO) des Gegenstands (1) im Wesentlichen gleich der oder etwas niedriger ist als die Temperatur (TP) der Lande-/Start-/Fahrbahn (P).

2. Vorrichtung nach Anspruch 1, darüber hinaus eine Rechneneinrichtung umfassend, die es ermöglicht, zu einem Zeitpunkt t0 eine Eisdicke (EP) zu einem Zeitpunkt t1 auf der Lande-/Start-/Fahrbahn (P) aus der in Bezug auf die Zeit (dEO/dt) der Entwicklungskurve der auf dem Gegenstand zum Zeitpunkt t0 vorhandenen Eisdicke (EO) ersten Ableitung vorzugeben.

3. Vorrichtung nach einem der Ansprüche 1 oder 2, **dadurch gekennzeichnet, dass** die mittels der Regelungseinrichtung (MR) geregelte Temperatur (TO) des Gegenstands etwas niedriger ist als die Temperatur (TP) der Lande-/Start-/Fahr-bahn (P).

4. Vorrichtung nach Anspruch 3, **dadurch gekennzeichnet, dass** der Unterschied zwischen der Temperatur (TP) der Lande-/Start-/Fahrbahn (P) und der geregelten Temperatur des Gegenstands gleich einem vorbestimmten Wert ist.

5. Vorrichtung nach einem der Ansprüche 1 bis 4, **dadurch gekennzeichnet, dass** sie darüber hinaus Einrichtungen umfasst, die es ermöglichen, den ordnungsgemäßen Funktionsablauf des Systems zu überprüfen, sobald die Temperatur der Lande-/Start-/Fahrbahn (P) unter einem vorgegebenen Schwellenwert liegt.

6. Vorrichtung nach einem der Ansprüche 1 bis 5, **dadurch gekennzeichnet, dass** der Gegenstand (1) in der Umgebungsatmosphäre beweglich ist, um die in Bezug auf die Umgebungsatmosphäre der Lande-/Start-/Fahrbahn (P) nicht Null betragende Geschwindigkeit zu erreichen.

7. Vorrichtung nach Anspruch 6, **dadurch gekennzeichnet, dass** der bewegliche Gegenstand um eine feststehende Achse XX' drehbeweglich ist, wobei der bewegliche Gegenstand eine Längsachse YY' hat, die sich in einer zur Drehachse senkrechten Ebene befindet, wobei der bewegliche Gegenstand so an einem Dreharm (B) montiert ist, der eine Längsachse ZZ' hat, dass die Achsen YY' und ZZ' einen Winkel ALPHA bilden, damit das am beweglichen Gegenstand gebildete Eis nicht durch Zentrifugalkraft weggeschleudert wird.

8. Vorrichtung nach einem der Ansprüche 1 bis 5, **dadurch gekennzeichnet, dass** sie eine Vorrichtung zur Zwangskonvektion der Umgebungsatmosphäre der Lande-/Start-/Fahrbahn (P) umfasst, in welcher der Gegenstand angeordnet ist, um die in Bezug auf die Umgebungsatmosphäre der Lande-/Start-/Fahrbahn (P) nicht Null betragende Geschwindigkeit (Vc) zu erreichen.

9. Verfahren zur antizipierten Erkennung einer Eisbelagsdicke (EP) auf einer Lande-/Start-/Fahrbahn (P), Folgendes umfassend:
einen Gegenstand (1), der eine nicht Null betragende Geschwindigkeit in Bezug auf die Umgebungsatmosphäre der Lande-/Start-/Fahrbahn (P) hat, wobei sich die Umgebungsatmosphäre auf einer Temperatur (TA) befindet,
- eine Einrichtung, die es ermöglicht, die auf dem Gegenstand vorhandene Eisdicke (EO) zu kennen,
- einen Temperatursensor (CT), der es ermöglicht, die Temperatur (TP) der Lande-/Start-/Fahrbahn (P) zu messen,
- eine Einrichtung (MR) zum Regeln der Temperatur (TO) des Gegenstands (1) auf eine solche Weise, dass die Temperatur (TO) des Gegenstands (1) im Wesentlichen gleich der Temperatur (TP) der Lande-/Start-/Fahrbahn (P) ist,
- ein Warnsystem, das es ermöglicht, eine Warnmeldung an einen Kontroll-posten (PC) zu übertragen, wenn die Eisdicke (EO) auf dem Gegenstand einen Wert erreicht, der einer bezeichnenden Eisdicke (EP) auf der Lande-/Start-/Fahr-bahn (P) entspricht,
**dadurch gekennzeichnet, dass** es die Schritte umfasst, die darin bestehen:
- die Temperatur (TP) der Lande-/Start-/Fahrbahn (P) zu messen,
- die Temperatur des Gegenstands auf eine Temperatur zu regeln, die gleich der oder etwas niedriger ist als diejenige der Lande-/Start-/Fahrbahn (P),
- die auf dem Gegenstand vorhandene Eisdicke zu messen,
- eine Warnmeldung an einen Kontrollposten zu schicken, sobald die Eisdicke auf dem Gegenstand einen vorgegebenen Wert überschreitet.

10. Verfahren nach Anspruch 9 zur antizipierten Erkennung einer Eisbelagsdicke (EP) auf einer Lande-/Start-/Fahrbahn (P), **dadurch gekennzeichnet, dass** der Schritt, der darin besteht, die auf dem Gegenstand vorhandene Eisdicke zu messen, darin besteht:
- die auf dem Gegenstand vorhandene Eisdicke zum Zeitpunkt t0 zu messen,
- die auf dem Gegenstand vorhandene Eisdicke zum Zeitpunkt t1 = t0 + dt zu messen, um aus den Informationen bezüglich der am Gegenstand zu den Zeitpunkten t0 und t1 vorhandenen Eisdicke zu berechnen, in welcher Zeitspanne DELTAt die Eisdicke auf der Lande-/Start-/Fahrbahn eine kritische Dicke erreichen wird,
und dass in dem Schritt, der darin besteht, eine Warnmeldung an einen Kontrollposten zu schicken, die Warnmeldung angibt, wie lange es dauern wird, bis die Eisdicke auf der Lande-/Start-/Fahrbahn (P) den kritischen Wert überschreitet.

## Claims

1. A device for anticipating the deposition of ice of a thickness (EP) on a runway (P), comprising:
- an object (1) having a non-zero relative velocity (VC) with respect to the atmosphere surrounding the runway (P), this surrounding atmosphere being at a temperature (TA),
- a means for determining the thickness of ice (EO) present on said object,
- a warning system enabling a warning to be communicated to a monitoring station (PC) when the thickness of ice (EO) on said object reaches a value corresponding to a significant thickness of ice (EP) on the runway (P),
**characterized in that** it further comprises
- a temperature sensor (CT) for measuring the temperature (TP) of the runway (P),
- a means (MR) for regulating the temperature (TO) of said object (1) in such a way that the temperature (TO) of said object (1) is substantially equal to or slightly below the temperature (TP) of the runway,

2. A device according to claim 1, further comprising a computing means for predetermining at time t0 a thickness of ice (EP) at time t1 on the runway (P) from the first derivative with respect to time (dEO/dt) of the development curve of the thickness (EO) of ice present on the object at time t0.

3. A device according to any one of claims 1 or 2, **characterized in that** the temperature (TO) of the object regulated by the regulation means (MR) is slightly below the temperature (TP) of the runway (P).

4. A device according to claim 3, **characterized in that** the difference between the temperature (TP) of the runway (P) and the regulated temperature of the object is equal to a predetermined value.

5. A device according to any one of claims 1 to 4, **characterized in that** it further comprises means for checking that the system is operating correctly as soon as the temperature of the runway is below a predetermined threshold value.

6. A device according to any one of claims 1 to 5, **characterized in that** the object (1) may move in the surrounding atmosphere in order to achieve the non-zero velocity with respect to the atmosphere surrounding the runway (P).

7. A device according to claim 6, **characterized in that** said moving object moves in rotation about a fixed axis XX', said moving object comprising a longitudinal axis YY', situated in a plane perpendicular to the axis of rotation, said moving object being mounted on a rotary arm (B) having a longitudinal axis ZZ', such that the axes YY' and ZZ' form an angle ALPHA so that the ice formed on the object is not ejected by the centrifugal force.

8. A device according to any one of claims 1 to 5, **characterized in that** it comprises a device for the forced convection of the atmosphere surrounding the runway (P) in which the object is placed in order to obtain said non-zero velocity (VC) with respect to the atmosphere surrounding the runway (P).

9. A method for the anticipated detection of the deposition of a thickness of ice (EP) on a runway (P), comprising:
- an object (1) having a non-zero velocity with respect to the atmosphere surrounding the runway (P), said surrounding atmosphere being at a temperature (TA),
- a means for determining the thickness of ice (EO) present on said object,
- a temperature sensor (CT) for measuring the temperature (TP) of the runway (P),
- a means (MR) for regulating the temperature (TO) of said object (1) in such a way that the temperature (TO) of said object (1) is substantially equal to the temperature (TP) of the runway,
- a warning system for sending a warning to a monitoring station (PC) when the thickness of ice (EO) on said object reaches a value corresponding to a significant thickness of ice (EP) on the runway (P),
**characterized in that** it comprises the stages of:
- measuring the temperature (TP) of the runway (P),
- regulating the temperature of said object to a temperature equal to or slightly below the temperature of said runway (P),
- measuring the thickness of ice present on said object,
- sending a warning message to a monitoring station as soon as the thickness of ice on the object exceeds a predetermined value.

10. A method for the anticipated detection of the deposition of ice of a thickness (EP) on a runway (P) according to claim 9, **characterized in that** the stage of measuring the thickness of ice on said object consists in:
- measuring the thickness of ice present on the object at time t0,
- measuring the thickness of ice on the object at time t1 = t0 + dt,
in order to calculate, from the information on the thickness of ice present on the object at the times t0 and t1, the time DELTAt that the thickness of ice on the runway will take to reach a critical thickness and **in that** during the stage consisting in sending a warning message to a monitoring station, the warning message indicates the time that the thickness of ice on the runway will take to exceed said critical value.
